# EUROPEAN PATENT APPLICATION

(11) **EP 3 936 009 A1**
(43) Date of publication of application: **12.01.2022**
(21) Application number: 20769349.0
(22) Date of filing: 05.03.2020
(51) Int. Cl.: A47J 31/20, A47J 31/46, A47J 31/54

(54) **AUTOMATIC TEA BREWING DEVICE**

(30) Priority: 08.03.2019 CN 201910176553
(71) Applicant: Jiangsu Zhongming Tea Set Technology Co., Ltd, Changzhou, Jiangsu 213000 (CN)
(72) Inventor: HAN, Jinsheng, hangzhou, Jiangsu 213000 (CN); HAN, Mulin, hangzhou, Jiangsu 213000 (CN)
(74) Representative: Weidner Stern Jeschke
(86) International application number: PCT/CN2020/078052
(87) International publication number: WO 2020/182056

(57) **Abstract**

An automatic tea brewing device, comprising a tea brewing container (2), an electrically controlled valve (4) provided on the tea brewing container (2) and used for tea water discharge, a water boiling assembly (5) used for heating water, a water inlet pipe (52) used for water injection, a water injection control device (6) provided on the water inlet pipe (52) and used for controlling supply of water flow or cutting the supply of water flow, and an electric control assembly (9); the water boiling assembly (5) comprises a heating cavity (51) and a first electric heating element (54); a water inlet of the heating cavity (51) is connected to the water inlet pipe (52), and a water outlet of the heating cavity (51) is in fluid communication with the tea brewing container (2); the electric control assembly (9) comprises a temperature measurement device (91) for measuring the temperature of the heated water, and a controller (95) for correspondingly controlling the connection and disconnection of the power supply to the water injection control device (6), the first electric heating element (54) and the electrically controlled valve (4) according to a measurement signal and a set parameter; the temperature measurement device (91), the water injection control device (6), the first electric heating element (54) and the electrically controlled valve (4) are all electrically connected to the controller (95). The automatic tea brewing device can reduce tea brewing time in use, has a relatively small structure, can achieve full automation of adding water, boiling water, brewing tea and discharging tea in use, and is easy to operate and use.

## Description

### Technical Field

The present disclosure relates to the technical field of tea sets, and in particular to an automatic tea brewing device.

### Background Art

There is a long history for tea culture, and there are various types of tea brewing appliances. As people's living standard has been continuously improved, there are increasing requirements for brewing tea. The water amount and the water temperature for brewing tea are very particular for different varieties of tea. Accordingly, tea brewing tools have been developed increasingly towards a direction of being automatic. Various automatic or semiautomatic tea brewing devices have been widely studied. For example, Chinese patent documents such as Patent Nos. CN205568527U, CN204683194U and CN206342271 U all involve an automatic tea set. However, the automatic tea set disclosed in the above documents fails to automatically control the tea brewing elements such as the water temperature for brewing tea, the water amount for brewing tea, and the time for brewing tea according to different varieties of tea leaves; and moreover, the automatic tea set disclosed in the above documents fails to achieve a full automation of adding water, boiling water, brewing tea and discharging tea, and is not an automatic tea set in its true sense. The Chinese patent document with the application publication No. CN108784361 A discloses an automatic tea brewing device that can implement the function of a full automation of tea brewing in a better manner, but it has the following shortcomings. First, the hot water required by the automatic tea brewing device for brewing tea needs to wait for a certain period of time for boiling the water. Secondly, the automatic tea brewing device as a whole is large in size, so it occupies a large space in use, which cannot effectively meet the use needs of some users. Thirdly, the automatic tea brewing device has a relatively complex structure and a relatively high cost.

### Summary

An object of the present disclosure is, in view of the problem in the prior art, to provide an automatic tea brewing device which saves time for brewing tea, which has a relatively small structure and a relatively low cost, and which can achieve a full automation of adding water, boiling water, brewing tea and discharging tea in use.

The technical solution of the present disclosure is as follows. An automatic tea brewing device of the present disclosure has the following structural features: comprising a tea brewing container, an electrically controlled valve provided on a bottom portion or a lateral lower portion of the above tea brewing container and configured to discharge tea water, a water boiling assembly configured to heat water, a water inlet pipe configured to inject water, a water injection control device provided on the above water inlet pipe and configured to control supplying or cutting of water flow, and an electrically controlled assembly, wherein the above electrically controlled valve is an electrically operated valve or a solenoid valve, and the above tea brewing container is provided with an opening for injecting water and putting into tea leaves; the above water boiling assembly comprises a heating cavity and a first electric heating element; the above heating cavity is a hollow member provided with a water inlet and a water outlet, and the first electric heating element is provided at an outer side of the heating cavity; a water inlet of the heating cavity is connected with the water inlet pipe, and a water outlet of the heating cavity is in liquid communication with the opening of the tea brewing container; the above electrically controlled assembly comprises a temperature detecting device for detecting temperature of heated water, and a controller for correspondingly controlling a connection and a disconnection of a power supply to the water injection control device, the first electric heating element and the electrically controlled valve according to a detected signal and a set parameter; and the above temperature detecting device, the water injection control device, the first electric heating element and the electrically controlled valve are all electrically connected with the controller.

A further solution is that the above water injection control device is an electrically operated water pump, an electrically operated valve or a solenoid valve whose flow rate is compatible with the above water boiling assembly.

A further solution is that the above electrically controlled assembly further comprises a first water amount detecting device for detecting tea water amount in the tea brewing container; and the above first water amount detecting device is electrically connected with the above controller.

A further solution is that the above first water amount detecting device is a weighing sensor or the above first water amount detecting device is a liquid level sensor.

A further solution is that the above electrically controlled assembly further comprises a liquid level detecting device for monitoring water level in the above heating cavity; and the above liquid level detecting device is electrically connected with the above controller for signal.

A further solution is that the above heating cavity is a member which is tubular as a whole, and the heating cavity and the above first electric heating element together constitute an electric hot water pipe.

A further solution is that the above controller comprises a signal converting module, a CPU module, a human-machine interaction module, a relay group, and a power supply module; the above CPU module is electrically connected with the signal converting module for signal, the relay group is electrically connected with the CPU module for signal, and the human-machine interaction module is electrically connected with the CPU module; the above temperature detecting device, the first water amount detecting device, and the liquid level detecting device are respectively electrically connected with the signal converting module of the controller; the above electronically controlled valve, the first electric heating element, and the water injection control device are respectively electrically connected with a corresponding relay in the relay group of the controller, and the power supply module is configured to provide a working power.

A further solution is that the following are further comprised: a tea leaf filtering piece provided in the above tea brewing container, a tea holding container for holding tea water, and a second electric heating element for heating the above tea holding container; the above electrically controlled assembly further comprises a second water amount detecting device for detecting tea water amount in the tea holding container, the above second water amount detecting device is electrically connected with the signal converting module of the controller, the second electric heating element is electrically connected with a corresponding relay in the relay group of the controller, and a connection and a disconnection of a power supply to the second electric heating element are controlled by the above controller.

A further solution is that the above second water amount detecting device is a weighing sensor; and the above temperature detecting device is a temperature sensor.

A further solution is that the above automatic tea brewing device further comprises a bracket, the above bracket comprises a base, a vertical frame, a first transversal frame, a second transversal frame, and a third transversal frame; the above vertical frame is integrally or fixedly provided at one side of the base; the first transversal frame is integrally or fixedly provided at an upper end of the vertical frame; the second transversal frame is provided on the first transversal frame, and located above the base; and the third transversal frame is provided on the base and located below the second transversal frame; and
the above tea brewing container is provided on the second transversal frame, the heating cavity of the water boiling assembly is provided on the first transversal frame, and is located at one side of the tea brewing container; the tea holding container is placed on the third transversal frame; the second water amount detecting device is provided between the third transversal frame and the base; and the second electric heating element is provided on the third transversal frame and is located at a position where the tea holding container is placed.

A further solution is that the above first electric heating element is a resistance heating device.
a further solution further includes: the above first electric heating element is an electromagnetic heating coil; a material of a part of the above heating cavity at least covered by the first electric heating element is a ferromagnetic material, or when the material of the heating cavity is a non-ferromagnetic material, a ferromagnetic material layer is provided between the first electric heating element and the heating cavity.

The present disclosure has positive effects as follows. (1) As compared with similar devices in the prior art, the automatic tea brewing device of the present disclosure can save the time for waiting for the hot water required for brewing tea to the greatest extent, through structural improvements such as an instant-heating water boiling assembly in cooperation with the provision of a water flow rate controlling device, thereby saving the overall time for brewing tea and meeting needs of users on market. (2) As compared with similar devices in the prior art, the automatic tea brewing device of the present disclosure has a relatively small whole structure by designing an overall structure, and thus it occupies a relatively small space in use, which meets needs of users who have limited space for placing the tea set. (3) By designing the whole structure, the automatic tea brewing device of the present disclosure in use can automatically control the tea brewing elements such as the water temperature for brewing tea, the water amount for brewing tea, and the time for brewing tea according to different varieties of tea leaves, so as to obtain the tea water having best taste according to different varieties of tea leaves; and moreover, the automatic tea brewing device of the present disclosure can achieve a full automation of adding water, boiling water, brewing tea and discharging tea water, with a high degree of automation, and being convenient and safe in use. (4) As compared with similar devices in the prior art, by designing the whole structure, the automatic tea brewing device of the present disclosure has a relatively simple structure and a relatively low cost. (5) The automatic tea brewing device of the present disclosure, by designing its water boiling assembly as an instant-heating water boiling member, has a fast speed of boiling water, which can save the time for waiting for the hot water required for brewing tea.

### Brief Description of Drawings

Fig. 1 is a structural schematic view of a first embodiment of the present disclosure;
Fig. 2 is a schematic structural view of a second embodiment of the present disclosure;
Fig. 3 is a schematic structural view of a third embodiment of the present disclosure;
Fig. 4 is a structural schematic view of a fourth embodiment of the present disclosure; and
Fig. 5 is a schematic block diagram of a circuit structure of the present disclosure.

Reference signs in the above figures are listed as follows:
bracket 1; base 11; vertical frame 12; first transversal frame 13; second transversal frame 14; third transversal frame 15; tea brewing container 2; opening 21; tea leaf filtering piece 3; electrically controlled valve 4; water boiling assembly 5; heating cavity 51; water inlet pipe 52; water outlet pipe 53; first electric heating element 54; electromagnetic heating coil 54-1; ferromagnetic material layer 54-2; water injection control device 6; tea holding container 7; second electric heating element 8; electrically controlled assembly 9; temperature detecting device 91; liquid level detecting device 92; first weighing sensor 93; second weighing sensor 94; controller 95.

### Detailed Description of the Embodiments

The present disclosure will be further described in detail below in connection with the drawings and the specific embodiments.

### (Embodiment 1)

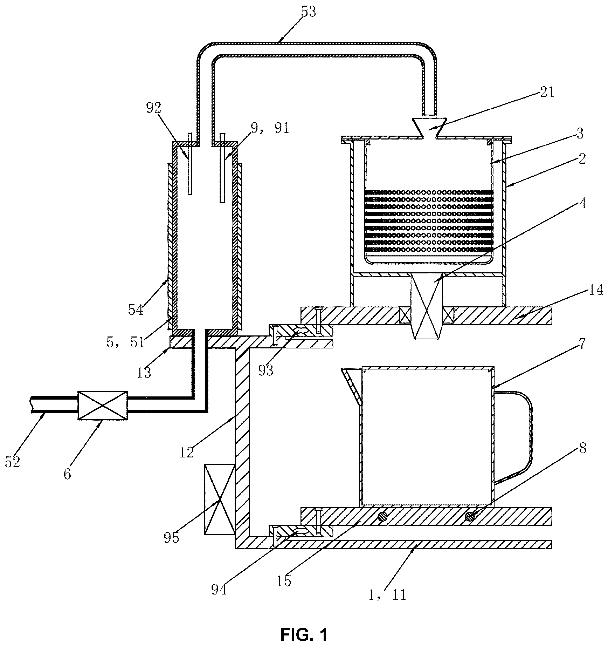

As shown in Fig. 1, the automatic tea brewing device of the embodiment is mainly consisting of a bracket 1, a tea brewing container 2, a tea leaf filtering piece 3, an electrically controlled valve 4, a water boiling assembly 5, a water injection control device 6, a tea holding container 7, and a second electric heating element 8, and an electrically controlled assembly 9.

The bracket 1 is configured to install and support related members of the device. In the embodiment, the bracket 1 is mainly consisting of a base 11, a vertical frame 12, a first transversal frame 13, a second transversal frame 14, and a third transversal frame 15; the vertical frame 12 is integrally or fixedly provided at one side of the base 11; the first transversal frame 13 is integrally or fixedly provided at an upper end of the vertical frame 12; and the second transversal frame 14 is provided on the first transversal frame 13 and located above the base 11. Regarding the third transversal frame 15, as a preferred solution, the third transversal frame 15 is provided on the base 11 and located below the second transversal frame 14.

The tea brewing container 2 is a hollow member, and the tea brewing container 2 is provided thereon with an opening 21 for injecting water and putting into tea leaves. In the embodiment, the opening 21 is preferably provided above the tea brewing container 2; the tea brewing container 2 at least comprises a bottom plate and a wall body integrally or hermetically fixedly connected, and the tea brewing container 2 is provided with a liquid outlet for discharging tea water. In the embodiment, the liquid outlet of the tea brewing container 2 is provided on the bottom plate. The tea brewing container 2 is fixedly provided on the second transversal frame 14 of the bracket 1.

The tea leaf filtering piece 3 is a member consisting of a bottom plate and a wall plate. The bottom plate and the wall plate of the tea leaf filtering piece 3 are provided with filtering holes. The shape and the size of the tea leaf filtering piece 3 are adapted to the tea brewing container 2, and the tea leaf filtering piece 3 is provided in the tea brewing container 2.

The electrically controlled valve 4 may adopt an electrically operated valve or a solenoid valve. The electrically controlled valve 4 is hermetically and fixedly provided at the liquid outlet of the tea brewing container 2. That is, in the embodiment, the electrically controlled valve 4 is provided on the bottom plate of the tea brewing container 2, and the electrically controlled valve 4 is configured to discharge tea water in use. When the electrically controlled valve 4 adopts an electrically operated valve, the electrically operated valve used is a commercially available product, and when the electrically operated valve 4 adopts a solenoid valve, it is also a product in the prior art, for example, the liquid communicating solenoid valve disclosed in the Chinese patent document with the application publication No. CN108825801 A.

The water boiling assembly 5 comprises a heating cavity 51, a water inlet pipe 52, a water outlet pipe 53 and a first electric heating element 54.

The heating cavity 51 is a hollow member provided with a water inlet and a water outlet. The heating cavity 51 is tubular as a whole. The water inlet of the heating cavity 51 is provided below an axial direction thereof, and the water outlet thereof is provided above the axial direction thereof. The heating cavity 51 is fixedly provided on the bracket 1, and preferably, the heating cavity 51 is fixedly provided on the first transversal frame 13 of the bracket 1 and is located at one side of the tea brewing container 2. One end of the water inlet pipe 52 is hermetically and fixedly connected with the water inlet of the heating cavity 51, and the other end of the water inlet pipe 52 is externally connected to a water source in use; the water outlet of the heating cavity 51 is in liquid communication with the opening 21 of the tea brewing container 2; in the embodiment, the liquid communication between the water outlet of the heating cavity 51 and the opening 21 of the tea brewing container 2 is preferably implemented by a water outlet pipe 53, one end of the water outlet pipe 53 is hermetically and fixedly connected with the water outlet of the heating cavity 51, and the other end of the water outlet pipe 53 is matched with the opening 21 of the tea brewing container 2, and boiled water or hot water is injected into the tea brewing container 2 in use. The first electric heating element 54 is configured to heat the heating cavity 51, and the first electric heating element 54 is provided at an outer side of the heating cavity 51. In the embodiment, the first electric heating element 54 adopts a resistance heating device, and the first electric heating element 54 is provided at an outer peripheral wall of the heating cavity 51.

The water injection control device 6 is provided on the water inlet pipe 52 and is configured to automatically control water injected into the heating cavity 51. The water injection control device 6 can adopt an electrically operated water pump, an electrically operated valve or a solenoid valve whose flow rate is compatible with a volume of the heating cavity 51. In the embodiment, the water injection control device 6 preferably adopts an electrically operated water pump.

As a preferred mode, the tea holding container 7 and the second electric heating element 8 are provided in cooperation with the third transversal frame 15 of the bracket 1, and the tea holding container 7 is a commercially available product with a liquid inlet, for example, a tea cup, a tea bowl or a teapot, etc. The tea holding container 7 is placed on the third transversal frame 15 in use, and the liquid inlet of the tea holding container 7 is located below the electrically controlled valve 4; the second electric heating element 8 is provided on the third transversal frame 15, and the second electric heating element 8 adopts a resistance heating element. In use, the second electric heating element 8 is configured to heat the tea holding container 7 holding the tea water as needed.

The electronically controlled assembly 9 comprises a temperature detecting device 91, a liquid level detecting device 92, a first water amount detecting device, a second water amount detecting device and a controller 95.

The temperature detecting device 91 is configured to detect water temperature of the water heated by the water boiling assembly 5. In the embodiment, the temperature detecting device 91 preferably adopts a temperature sensor. The temperature detecting device 91 may be provided on the heating cavity 51, on the water outlet pipe 53 or on the tea brewing container 2. The liquid level detecting device 92 is configured to detect water level in the heating cavity 51 to prevent the water level in the heating cavity 51 from being too low, which causes the heating cavity 51 to be burnt. The liquid level detecting device 92 preferably adopts a liquid level sensor in the embodiment. The first water amount detecting device is configured to detect tea water amount in the tea brewing container 2. In the embodiment, the first water amount detecting device adopts a first weighing sensor 93 provided between the first transversal frame 13 and the second transversal frame 14 of the bracket 1, the first water amount detecting device may also adopt a liquid level sensor (not shown in the figure) provided on the tea brewing container 2, and the first water amount detecting device may also adopt a flow rate sensor (not shown in the figure) provided on the water outlet pipe 53 of the water boiling assembly 5. As a preferred mode, the second water amount detecting device is provided in cooperation with the tea holding container 7 to detect tea water amount in the tea holding container 7. In the embodiment, the second water amount detecting device preferably adopts a second weighing sensor 94 provided between the third transversal frame 15 of the bracket 1 and the base 11.

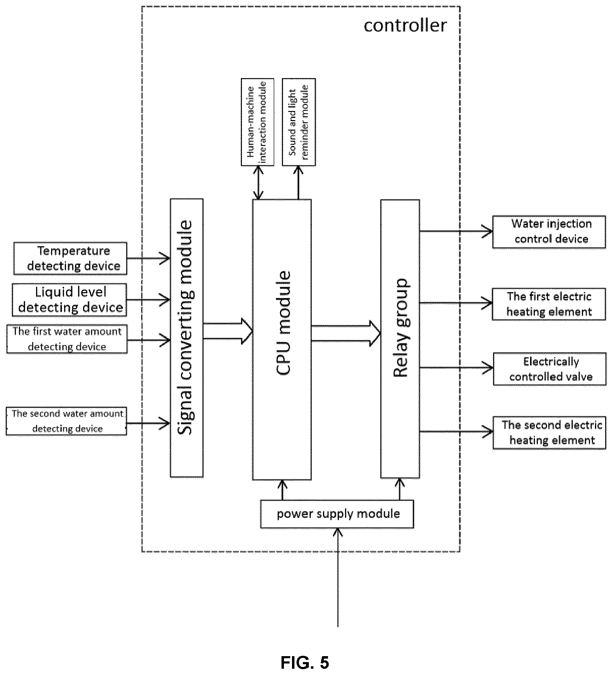

The controller 95 may be provided on the bracket 1, or may be installed independently. Referring to Fig. 5, the controller 95 is mainly consisting of a signal converting module, a CPU module, a human-machine interaction module, a relay group, and a power supply module. The CPU module is electrically connected with the signal converting module for signal, the relay group is electrically connected with the CPU module for signal, and the human-machine interaction module is electrically connected with the CPU module. The signal converting module is configured to convert signals, such as the water temperature detected by the temperature detecting device 91, the water amount in the heating cavity 51 detected by the liquid level detecting device 92, the tea water amount in the tea brewing container 2 detected by the first water amount detecting device, and the tea water amount in the tea holding container 7 detected by the second water amount detecting device, into signals that can be received by the CPU module and send them to the CPU module. The signal converting module is a conventional circuit module in the prior art, and its structure is not described in detail here. The human-machine interaction module, preferably a touch screen, is configured to set parameter settings including water amount for brewing tea, water temperature for brewing tea, and time for brewing tea according to different varieties of tea leaves, and to display working status in real time in use; the relay group, including several relays, is configured to control a connection and a disconnection of a power supply to the electrically controlled valve 4, the first electric heating element 54, the second electric heating element 8 and the water injection control device 6 according to an instruction of the CPU module; the CPU module is configured to realize a main control of the device; and the CPU module comprises a CPU chip and a memory, where program built into the CPU chip is a simple prior art program. The power supply module is configured to provide working power supply. In use, an input end of the power supply module is externally connected to the mains supply. As a preferred mode, the controller 95 further comprises a sound and light reminder module for reminding that the tea water is ready for drinking; the sound and light reminder module is electrically connected with the CPU module, and in the embodiment, the sound and light reminder module is consisting of a buzzer and an LED lamp. The functional modules of the controller 95 are all mature existing technologies.

The foregoing temperature detecting device 91, the foregoing liquid level detecting device 92, the foregoing first water amount detecting device, and the foregoing second water amount detecting device are respectively electrically connected to the signal converting module of the controller 95; the electronically controlled valve 4, the first electric heating element 54, the second electric heating element 8 and the water injection control device 6 are respectively electrically connected with a corresponding relay in the relay group of the controller 95.

The use method and working principle of the automatic tea brewing device of the embodiment are briefly described as follows.

When the automatic tea brewing device of the embodiment is used, a user first powers on the automatic tea brewing device, puts the tea leaves required for brewing tea into the tea leaf filtering piece 3 in the tea brewing container 2, and inputs correspondingly, through the human-machine interaction module of the controller 95, parameters such as water amount for brewing tea, water temperature for brewing tea, and time for brewing tea according to the variety of tea leaves; the set parameters are sent to the CPU module for storage; a second weighing sensor 94 detects in real time whether the tea holding container 7 has been placed on the third transversal frame 15, and if the tea holding container 7 has been placed on the third transversal frame, after receiving a signal of the second weighing sensor 94, the CPU module activates the water injection control device 6 through the relay group so that the water inlet pipe 52 is leaded to the heating cavity 51 to fill it fully with water; whether the heating cavity 51 is filled fully with water can be determined according to the flow rate and the connecting-time of the water injection control device 6, and the liquid level detecting device 92 can detect in real time water amount in the heating cavity 51 and feeds back a signal to the CPU module. After the water amount in the heating cavity 51 is full, the CPU module controls, through the relay group, the water injection control device 6 to close, and at the same time controls the first electric heating element 54 to power on, so as to heat the water in the heating cavity 51, and the temperature detecting device 91 detects in real time water temperature in the heating cavity 51. When the water in the heating cavity 51 is heated to a set temperature, the CPU module controls, through the relay group, the water injection control device 6 to start again, and the hot water in the heating cavity 51 is injected into the tea brewing container 2 through the outlet pipe 53 under water pressure. The first electric heating element 54 continues to heat the water in the heating cavity 51, and the first water amount detecting device, such as the first weighing sensor 93, monitors in real time the hot water amount added to the tea brewing container 2 and feeds back a signal to the CPU module. After the water amount for brewing tea is added to the set amount, the CPU module controls, through the relay group, the water injection control device 6 to close, and stops injecting water into the tea brewing container 2. The CPU module starts timing the time for brewing tea, and when the timing reaches the set time for brewing tea, the sound and light reminder module of the controller 95 sends out sound and light reminders to remind that the tea water is ready for drinking. At the same time, the CPU module controls, through the relay group, the electrically controlled valve 4 to power on, so as to start injecting tea water into the tea holding container 7 until the tea water in the tea brewing container 2 is basically emptied. The second weighing sensor 94 monitors in real time the tea water amount added into the tea holding container 7 and feeds back a signal to the CPU module in real time. After the tea water in the tea holding container 7 reaches a set amount, the CPU module closes the electrically controlled valve 4 through the relay group to stop discharging tea water, and the user drinks tea through the tea holding container 7. If the user needs to refill the tea water without drinking all the tea water in the tea holding container 7, the tea holding container 7 with the remaining tea water is placed on the third transversal frame 15, and the second weighing sensor 94 sends a weight signal to the CPU module, and the CPU module determines tea water amount needed to be refilled according to the remaining tea water amount in the tea holding container 7, and then the tea refilling action is completed by adding water, brewing tea, and discharging tea water into the tea holding container 7 by referring to the aforementioned actions. During use, if the tea water in the tea holding container 7 gets cold and needs to be heated and there is no need to refill the tea water, the tea holding container 7 may be placed on the third transversal frame 15, and by operating the human-machine interaction module of the controller 95, the second electric heating element 8 controlled by the controller 95 is started to power on, so as to heat the tea holding container 7. In use, the heating cavity 51 of the water boiling assembly 5 and the first electric heating element 54 constitute an instant-heating water boiling member, which has a fast speed of boiling water, and saves the time for waiting for the hot water required for brewing tea.

### (Embodiment 2)

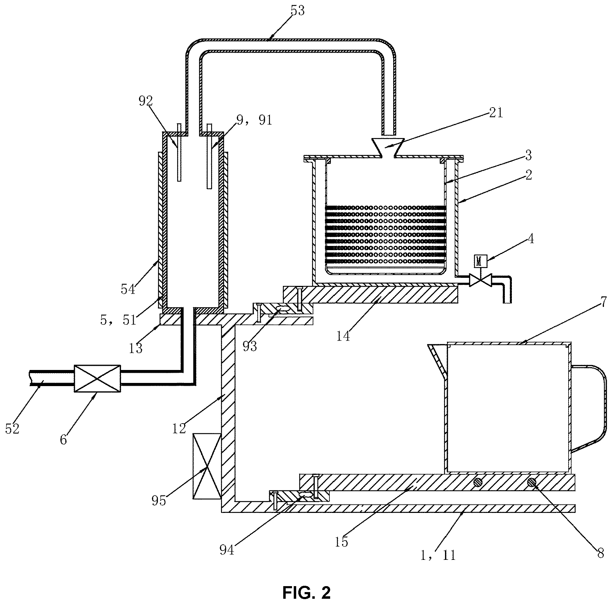

As shown in Fig. 2, the automatic tea brewing device of the embodiment is basically the same as that of Embodiment 1 in other respects, with the difference that a liquid outlet of the tea brewing container 2 is provided at a lateral lower portion of the tea brewing container, that is, at a junction portion of the wall body and the bottom plate of the tea brewing container 2, and the electrically controlled valve 4 is hermetically provided above the liquid outlet of the tea brewing container 2 and discharges water downward.

### (Embodiment 3)

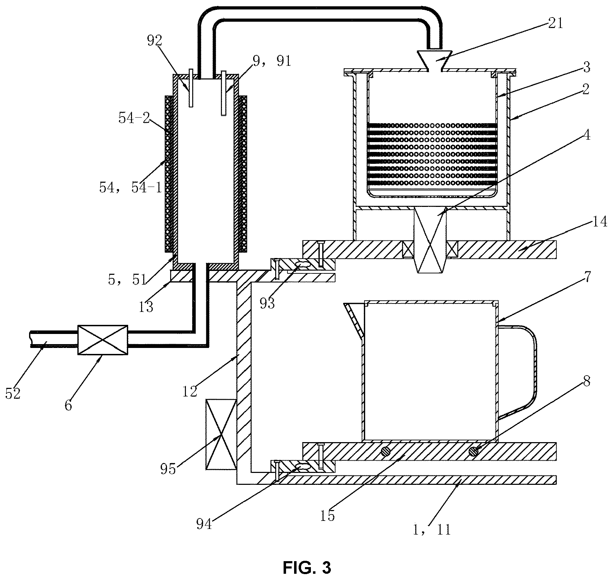

Referring to Fig. 3, the automatic tea brewing device of the embodiment is basically the same as that of Embodiment 1 in other respects, with the difference that the first electric heating element 54 adopts an electromagnetic heating coil, as shown in Figs. 1 and 2; and in the embodiment, the electric heating element 54 preferably adopts an electromagnetic heating coil 54-1, and when the electromagnetic heating coil 54-1 is adopted, a material of a part of the heating cavity 51 at least covered by the first electric heating element 54 is a ferromagnetic material, or when the material of the heating cavity 51 is a non-ferromagnetic material, a ferromagnetic material layer 54-2 is provided between the first electric heating element 54 and the heating cavity 51, so that the electromagnetic heating coil can heat the heating cavity 51. The electromagnetic heating coil is the prior art, and its structure and working principle are not described in detail here.

### (Embodiment 4)

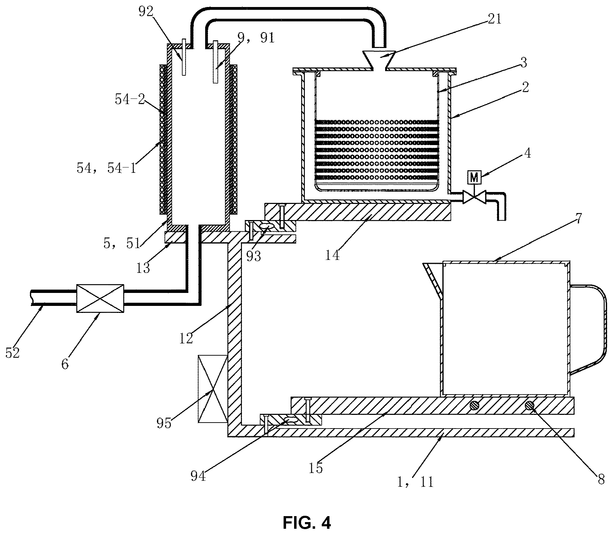

As shown in Fig. 4, the automatic tea brewing device of the embodiment is basically the same as that of Embodiment 3 in other respects, with the difference that a liquid outlet of the tea brewing container 2 is provided at a lateral lower portion of the tea brewing container, that is, at a junction portion of the wall body and the bottom plate of the tea brewing container 2, and the electrically controlled valve 4 is hermetically provided above the liquid outlet of the tea brewing container 2 and discharges water downward.

The above embodiments are descriptions of specific implementations of the present disclosure, rather than limitations to the present disclosure. Those skilled in the related art can also make various transforms and changes to obtain corresponding equivalent technical solutions without departing from the spirit and scope of the present disclosure. Therefore, all equivalent technical solutions should be included in the patent scope of protection of the present disclosure.

## Claims

1. An automatic tea brewing device, **characterized by** comprising a tea brewing container, an electrically controlled valve provided on a bottom portion or a lateral lower portion of the tea brewing container and configured to discharge tea water, a water boiling assembly configured to heat water, a water inlet pipe configured to inject water, a water injection control device provided on the water inlet pipe and configured to control supplying or stopping of water flow, and an electrically controlled assembly, wherein the electrically controlled valve is an electrically operated valve or a solenoid valve, and the tea brewing container is provided with an opening which allows the water to be injected and tea leaves to be put therein; the water boiling assembly comprises a heating cavity and a first electric heating element, wherein the heating cavity is a hollow member provided with a water inlet and a water outlet, and the first electric heating element is provided at an outer side of the heating cavity; the water inlet of the heating cavity is connected with the water inlet pipe, and the water outlet of the heating cavity is in liquid communication with the opening of the tea brewing container; the electrically controlled assembly comprises a temperature detecting device for detecting temperature of heated water, a controller for correspondingly controlling a connection and a disconnection of a power supply to the water injection control device, the first electric heating element and the electrically controlled valve according to a detected signal and a set parameter; and the temperature detecting device, the water injection control device, the first electric heating element and the electrically controlled valve are all electrically connected with the controller.

2. The automatic tea brewing device according to claim 1, wherein the water injection control device is an electrically operated water pump, an electrically operated valve or a solenoid valve whose flow rate is compatible with the water boiling assembly.

3. The automatic tea brewing device according to claim 1, wherein the electrically controlled assembly further comprises a first water amount detecting device for detecting tea water amount in the tea brewing container; and the first water amount detecting device is electrically connected with the controller.

4. The automatic tea brewing device according to claim 3, wherein the first water amount detecting device is a weighing sensor or the first water amount detecting device is a liquid level sensor.

5. The automatic tea brewing device according to claim 3, wherein the electrically controlled assembly further comprises a liquid level detecting device for monitoring water level in the heating cavity; and the liquid level detecting device is electrically connected with the controller for signal.

6. The automatic tea brewing device according to claim 1, wherein the heating cavity is a member which is tubular as a whole, and the heating cavity and the first electric heating element constitute an electric hot water pipe.

7. The automatic tea brewing device according to claim 5, wherein the controller comprises a signal converting module, a CPU module, a human-machine interaction module, a relay group, and a power supply module, wherein the CPU module is electrically connected with the signal converting module for signal, the relay group is electrically connected with the CPU module for signal, and the human-machine interaction module is electrically connected with the CPU module; the temperature detecting device, the first water amount detecting device, and the liquid level detecting device are respectively electrically connected with the signal converting module of the controller; and the electronically controlled valve, the first electric heating element, and the water injection control device are respectively electrically connected with a corresponding relay in the relay group of the controller, and the power supply module is configured to provide a working power.

8. The automatic tea brewing device according to claim 7, further comprising a tea leaf filtering piece provided in the tea brewing container, a tea holding container for holding tea water, and a second electric heating element for heating the tea holding container; and the electrically controlled assembly further comprises a second water amount detecting device for detecting tea water amount in the tea holding container, the second water amount detecting device is electrically connected with the signal converting module of the controller, and the second electric heating element is electrically connected with a corresponding relay in the relay group of the controller, and a connection and a disconnection of a power supply of the second electric heating element are controlled by the controller.

9. The automatic tea brewing device according to claim 8, wherein the second water amount detecting device is a weighing sensor; and the temperature detecting device is a temperature sensor.

10. The automatic tea brewing device according to claim 8, wherein the automatic tea brewing device further comprises a bracket, wherein the bracket comprises a base, a vertical frame, a first transversal frame, a second transversal frame, and a third transversal frame, wherein the vertical frame is integrally or fixedly provided at one side of the base; the first transversal frame is integrally or fixedly provided at an upper end of the vertical frame; the second transversal frame is provided on the first transversal frame and located above the base; and the third transversal frame is provided on the base and located below the second transversal frame; and
the tea brewing container is provided on the second transversal frame, the heating cavity of the water boiling assembly is provided on the first transversal frame, and is located at one side of the tea brewing container; the tea holding container is placed on the third transversal frame; the second water amount detecting device is provided between the third transversal frame and the base; and the second electric heating element is provided on the third transversal frame and is located at a position where the tea holding container is placed.

11. The automatic tea brewing device according to claim 1, wherein the first electric heating element is a resistance heating device.

12. The automatic tea brewing device according to claim 1, wherein the first electric heating element is an electromagnetic heating coil; a material of a part of the heating cavity at least covered by the first electric heating element is a ferromagnetic material, or when a material of the heating cavity is a non-ferromagnetic material, a ferromagnetic material layer is provided between the first electric heating element and the heating cavity.
